# EUROPÄISCHE PATENTSCHRIFT

(11) **EP 4 650 154 B1**
(45) Veröffentlichungstag und Bekanntmachung des Hinweises auf die Patenterteilung: **23.09.2026**
(21) Anmeldenummer: 25172903.4
(22) Anmeldetag: 28.04.2025
(51) Int. Cl.: B29C 65/18, B29C 65/78, B65B 25/00, B65B 11/54, B65B 51/10

(54) **VERFAHREN ZUM GLEICHMÄSSIGEN SAUGSIEGELN**
METHOD FOR UNIFORM SUCTION SEALING
PROCÉDÉ POUR SCELLER UNIFORMÉMENT PAR ASPIRATION

(30) Priorität: 10.05.2024 DE 102024113124
(43) Veröffentlichungstag der Anmeldung: 19.11.2025
(73) Patentinhaber: Theegarten-Pactec GmbH & Co. KG, 01237 Dresden (DE)
(72) Erfinder: Menter, Daniel, 01307 Dresden (DE); Fuchs, Ingolf, 01099 Dresden (DE)
(74) Vertreter: Grünecker Patent- und Rechtsanwälte PartG mbB

(56) Entgegenhaltungen:
- EP-A1- 4 249 219

## Beschreibung

Die vorliegende Erfindung betrifft ein Verfahren zum Saugsiegeln einer Überlappungsnaht beim Verpacken von empfindlichen, insbesondere wärmeempfindlichen Produkten.

Aus der EP 4 249 219 A1 ist ein solches Verfahren und eine zugehörige Saugsiegelvorrichtung bekannt. Ein empfindliches Produkt, zum Beispiel ein Schokoladenriegel, wird mit einem versiegelungsfähigen Packmittelzuschnitt umhüllt und es wird eine Überlappungsnaht erzeugt, indem eine Innenseite eines ersten Kantenbereichs auf einer Außenseite eines zweiten Kantenbereichs des Packmittelzuschnitts gefaltet wird. Der Packmittelzuschnitt wird dann im Abstand zur und entlang der Überlappungsnaht am Produkt niedergehalten und die Überlappungsnaht mittels einer Saugsiegelvorrichtung fixiert. Hierzu wird zumindest ein Bereich der Überlappungsnaht an eine Kontaktseite der Saugsiegelvorrichtung angesaugt und zumindest teilweise vom Produkt abgehoben. Im abgehobenen Abschnitt der Überlappungsnaht erfolgt dann die Warmversiegelung. Hierdurch können negative Wärmeeinwirkungen auf das Produkt vermieden werden. Allerdings hat sich bei Versuchen gezeigt, dass die Qualität der versiegelten Überlappungsnaht und die Reproduzierbarkeit bei den kurzen zur Verfügung stehenden Taktzeiten in schnell arbeitenden Verpackungsmaschinen hohen Standards noch nicht genügt.

Grundsätzliche Überlegungen zum Saugsiegeln sind auch aus der DE 10 2020 117 369 A1 bekannt.

Der Erfindung liegt daher die Aufgabe zugrunde, ein Verfahren zum Saugsiegeln einer Überlappungsnaht zu verbessern.

Diese Aufgabe wird erfindungsgemäß durch ein Verfahren zum Saugsiegeln einer Überlappungsnaht mit folgenden Schritten gelöst:
Umhüllen des Produkts mit einem versiegelungsfähigen Packmittelzuschnitt, wobei eine Überlappungsnaht erzeugt wird, indem eine Innenseite eines ersten Kantenbereichs auf eine Außenseite eines zweiten Kantenbereichs des Packmittels gefaltet wird,

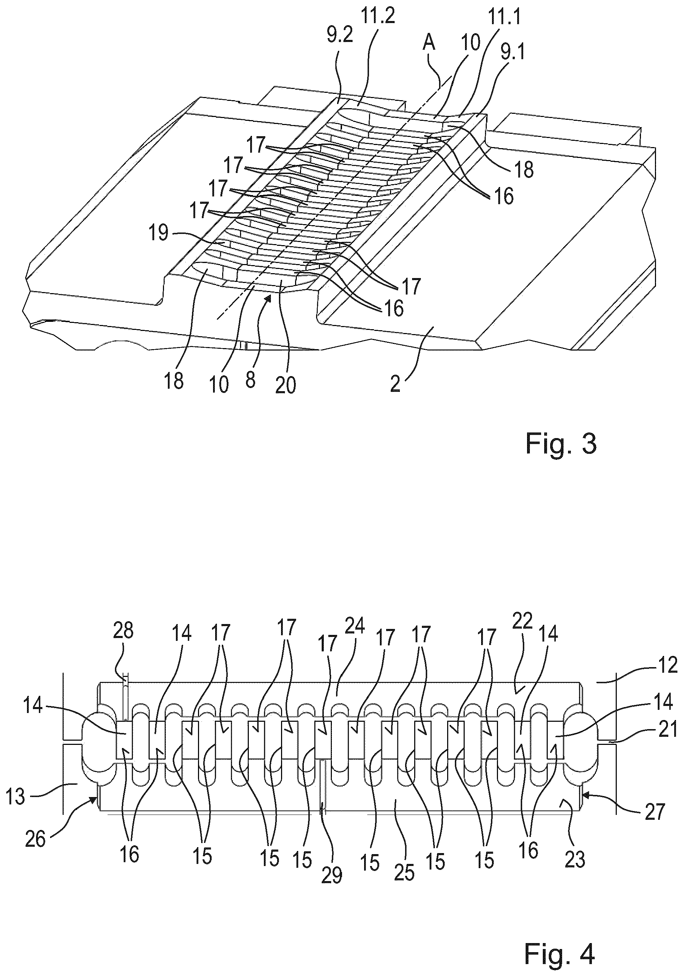

Fixieren der Überlappungsnaht mittels einer Saugsiegelvorrichtung, indem zumindest ein Bereich oder Bereiche der Überlappungsnaht an eine Kontaktseite der Saugsiegelvorrichtung angesaugt wird bzw. werden, sodass der erste und der zweite Kantenbereich des Packmittelzuschnitts im Bereich der Überlappungsnaht vom Produkt abgehoben werden, wobei zumindest im abgehobenen Zustand der Kantenbereiche ein Wärmeenergieeintrag mittels der Saugsiegelvorrichtung derart erfolgt, dass entlang der Längsachse der Überlappungsnaht (z.B. deckungsgleich mit der Achse "A" in Fig. 3) ein Wärmeenergieprofil vorliegt, bei dem entlang der Längsachse in Bezug auf zumindest einen Bereich der Überlappungsnaht mindestens ein Siegelparameter anders eingestellt ist als in Bezug auf mindestens einen anderen Bereich der Überlappungsnaht, wobei der mindestens eine Siegelparameter aus folgender Gruppe umfassend (a) bis (d) ausgewählt ist: (a) die Kontaktzeit des Packmittelzuschnitts mit dem jeweils zugeordneten wärmeeinbringenden Bereich der Saugsiegelvorrichtung, (b) die Wärmeenergiezufuhr pro mm², (c) der Ansaugdruck und (d) die Siegelfähigkeit des Packmittelzuschnitts.

Zum Beispiel lässt sich in Abhängigkeit von einer Verpackungsform oder -art die Wärmeenergieeinbringung nach einem Profil vorgeben bzw. einstellen. Die Überlappungsnaht soll in vielen Fällen möglichst gleichmäßig versiegelt werden, was abhängig von verschiedenen Parametern sein kann, wie z. B. der Art des Verpackungsmaterials, der Art des Falteinschlags insbesondere an den Stirnseiten des Produkts, der geometrischen Ausgestaltung der Saugsiegelvorrichtung etc. Ziel ist es vorrangig, eine gleichmäßige Versiegelung der Überlappungsnaht über die gesamte Länge des zu versiegelnden Bereichs zu erzielen. Die Erfinder haben erkannt, dass es hierzu in aller Regel nicht von Vorteil ist, eine Versiegelung mit gleichen Siegelparametern über die gesamte Länge der Siegelnaht vorzunehmen, sondern ein angepasstes Profil zu verwenden, das den unterschiedlichen Anforderungen der Warmversiegelung entlang der Längserstreckung der Überlappungsnaht Rechnung trägt. Hierzu kann an mindestens einer Stelle oder einem Bereich der zu versiegelnden Überlappungsnaht eine höhere Wärmeenergie (kJ) pro mm² (oder auch - weil bei den meist schnell arbeitenden Maschinen auch die zur Verfügung stehende Zeit für die Warmversiegelung eine wichtige Rolle spielt - eine höhere flächenbezogene Wärmestromdichte ( $\frac{kJ}{s \times {mm}^{2}}$)) eingebracht werden. Die Längsachse der Überlappungsnaht ist die Achse mit der größten Ausdehnung der Naht und ist z.B. deckungsgleich mit der Achse "A" in Fig. 3. Diese verläuft üblicherweise parallel zu den freien Kanten der sich überlappenden Packmittelbereiche. Bevorzugt kann gemäß einer Variante als anders eingestellter Siegelparameter zumindest die Wärmeenergiezufuhr pro mm² verwendet werden, wobei das Wärmeenergieprofil beim Fixierschritt derart ausgebildet ist, dass in einem Bereich der höchsten Wärmeenergiezufuhr pro mm² eine 1,01 bis 1,3 mal, bevorzugt eine 1,05 bis 1,15 mal, höhere Wärmeenergiezufuhr pro mm² als in einem Bereich mit der geringsten Wärmeenergiezufuhr pro mm² vorhanden ist. Das Ganze ist selbstverständlich auf den zu versiegelnden Abschnitt der Überlappungsnaht bezogen. Gemäß einer Ausführungsvariante kann an den Endbereichen des zu versiegelnden Abschnitts der Überlappungsnaht eine höhere Wärmeenergiezufuhr pro mm² als an mindestens einem dazwischenliegenden Bereich des zu versiegelnden Abschnitts der Überlappungsnaht erfolgen. Insbesondere in den Bereichen, in denen neben den beiden die Überlappungsnaht formenden Kantenbereichen auch die Kantenbereiche des Stirneinschlags vorhanden sind, sodass an diesen Stellen mehr als zwei Lagen des Packmittelzuschnitts vorliegen, ist ein höherer Wärmeenergieeintrag für eine saubere Warmversiegelung von Nutzen.

Vorteilhafterweise kann die höhere Wärmeenergiezufuhr pro mm² in zumindest einem Bereich des zu versiegelnden Abschnitts der Überlappungsnaht mittels einer verstärkten Ansaugung in diesem Bereich oder in der Nähe dieses Bereichs, bevorzugt angrenzend an diesen Bereich, zumindest unterstützend bewirkt werden. Eine stärkere Ansaugung sorgt vor allem für ein schnelleres Ansaugen an der Wirkstelle und auch für eine intensivere Anlage des Verpackungsmaterials an der Saugsiegelvorrichtung. Hierdurch wird ein besserer Wärmeübergang bewirkt, der sich verstärkend auf die Wärmeenergiezufuhr pro mm² auswirkt. Diese Maßnahme kann bei einigen Anwendungen vollständig ausreichen, wird jedoch in den meisten Fällen zusätzlich zu anderen, die Wärmeenergiezufuhr pro mm² erhöhenden Maßnahmen verwendet.

Eine alternative Verfahrensvariante sieht vor, dass die höhere Wärmeenergiezufuhr pro mm² in zumindest einem Bereich des zu versiegelnden Abschnitts der Überlappungsnaht mittels einer höheren Siegeltemperatur im entsprechend zugeordneten Bereich der Saugsiegelvorrichtung zumindest unterstützend bewirkt wird. Eine Kombination mit anderen die Wärmeenergiezufuhr pro mm² erhöhenden Maßnahmen ist möglich. Die Siegeltemperatur wird demnach nur lokal erhöht, nämlich an der Stelle bzw. den Stellen, an der bzw. denen es für einen gut ausgeführten Warmsiegelvorgang notwendig ist. Die Siegeltemperatur kann in den jeweiligen Bereichen der Saugsiegelvorrichtung, bevorzugt getrennt, einstellbar sein.

Die vorliegende Erfindung bezieht sich auch auf eine Saugsiegelvorrichtung zum Warmsiegeln einer Überlappungsnaht mit einer Längsachse beim Verpacken von empfindlichen, insbesondere wärmeempfindlichen Produkten, mit einer Siegelleiste, die eine Kontaktseite aufweist und an dieser Kontaktseite mit mehreren Saugöffnungen versehen ist. Der die Wärmeenergie für das Warmsiegeln einbringende Bereich bzw. die die Wärmeenergie für das Warmsiegeln einbringenden Bereiche der Kontaktseite der Siegelleiste ist bzw. sind in Richtung der Längsachse der zu versiegelnden Überlappungsnaht in mindestens zwei Zonen unterteilt, mittels derer jeweils eine andere Wärmeenergiezufuhr pro mm² in unterschiedliche Bereiche des zu versiegelnden Abschnitts der Überlappungsnaht einbringbar ist. Sofern mindestens 2, kann die Anzahl der Zonen beliebig sein. Es wird demnach eine Betrachtung in Längsrichtung der Überlappungsnaht entlang deren Längsachse vorgenommen, d. h. es werden unterschiedliche, in Längsrichtung nebeneinanderliegende oder voneinander beabstandete Zonen betrachtet. Es sind aber auch zusätzlich unterschiedliche Zonen der Wärmeenergieeinbringung in Querrichtung der Überlappungsnaht möglich. Wünschenswert ist es insbesondere, wenn die Wärmeenergiezufuhr pro Zone, bevorzugt jeweils unabhängig, einstellbar oder vorwählbar ist. Es kann auch eine entsprechende Steuerung oder Regelung vorgesehen werden, um das gewünschte Wärmeprofil zu erhalten.

Es hat sich gemäß einer Ausführungsform als vorteilhaft herausgestellt, wenn die Siegelleiste derart ausgebildet ist, dass jeweils an den Enden des zu versiegelnden Abschnitts der Überlappungsnaht eine Zone mit einer höheren Wärmeenergiezufuhr pro mm² als in einem dazwischenliegenden Bereich vorhanden ist. Hierdurch werden insbesondere die Enden der Überlappungsnaht, an denen oftmals mehr als zwei Lagen Verpackungsmaterial übereinanderliegen, sauber versiegelt.

Bevorzugt kann die Kontaktfläche der Siegelleiste jeweils an den Enden des Warmsiegelbereichs mit mindestens einer Saugöffnung, die größer ist als die des mittleren Abschnitts des Warmsiegelbereichs, versehen sein. Wird zum Beispiel eine einheitliche Saugvorrichtung verwendet, kann durch die Vergrößerung bestimmter Saugöffnungen eine verstärkte Ansaugung in diesen Bereichen erzielt werden. Es handelt sich demnach um eine einfache Maßnahme, um das Packmaterial stärker gegen die Saugsiegelvorrichtung zu ziehen. Hierdurch verbessert sich in den jeweiligen Bereichen der Wärmeübergang zwischen der Saugsiegelvorrichtung und dem Verpackungsmaterial. Alleine durch die Verwendung unterschiedlich großer Ansaugöffnungen ließe sich bereits ein vorteilhaftes Wärmeenergieprofil erzeugen.

Bei einer weiteren Ausführungsform ist vorgesehen, dass die Saugöffnungen beim Warmsiegeln in Längsrichtung der Überlappungsnaht nebeneinander angeordnet sind, die Kontaktseite einen längs der Überlappungsnaht anzuordnenden, von den Ansaugöffnungen jeweils unterbrochenen Siegelstreifen mit höherer Wärmeleitfähigkeit und/oder höherer einbringbarer Wärmekapazität als der Rest der Kontaktseite aufweist und die mindestens zwei Zonen mit unterschiedlicher Wärmeenergiezufuhr pro mm² von dem Siegelstreifen bereitgestellt sind. Zum Beispiel kann in Abhängigkeit der Größe der an eine Zone des Siegelstreifens angrenzenden Saugöffnung ein verbesserter Wärmeübergang in der Zone, die neben der entsprechenden Saugöffnung liegt, bewirkt werden.

Es ist gemäß einer weiteren Ausführungsform von Vorteil, wenn der Siegelstreifen an der Kontaktseite von mindestens zwei separaten Siegelstreifenelementen geformt ist, deren Temperatur jeweils (bevorzugt getrennt) einstellbar, bevorzugt steuer- oder regelbar, ist. Jedes dieser Siegelstreifenelemente ist dann einer oder mehreren Zonen, bevorzugt mit gleicher Wärmeenergiezufuhr pro mm², zugeordnet. Es handelt sich hierbei um eine sehr einfache Ausgestaltungsform , um Zonen mit unterschiedlicher Wärmeenergieübertragung zu erhalten.

Bevorzugt kann eines oder auch jedes Siegelstreifenelement mit einem eigenen Temperatursensor versehen sein. Hierdurch lässt sich sehr einfach die Temperatur des Siegelstreifenelements bestimmen und gegebenenfalls nachsteuern bzw. nachregeln.

Die Kontaktseite der Siegelleiste kann bei einer weiteren Variante eine beim Warmsiegeln entlang der Überlappungsnaht verlaufende Rinnenform mit zwei im Abstand zueinander verlaufenden Niederhaltezonen und dem dazwischen und zu den Niederhaltezonen vertieft angeordneten Siegelstreifen aufweisen. Hierdurch wird eine Art länglich ausgebildete Saugglocke mit eventuell offenen Stirnseiten erzeugt. Die Ansaugcharakteristik lässt sich hierdurch verbessern. Es werden genaue Ansaugwege geschaffen und die Ansaugwirkung wird konzentriert. Hierdurch erfolgt das Ansaugen schneller und reproduzierbarer. Damit ergeben sich definierte Kontaktzeiten zur Siegelleiste, wodurch eine wesentliche Voraussetzung für den taktweise konstanten Energieeintrag an der jeweiligen Zone (Wirkstelle) erzielt wird, was für schnell arbeitende Verpackungsmaschinen von großem Vorteil ist. Darüber hinaus sind die Niederhaltezonen Bestandteil der Siegelleiste, wodurch das Niederhalten nahe an der Warmsiegelzone erfolgt. Hierdurch wird ein schnelleres, effektiveres Ansaugen der beiden Kantenbereiche der Überlappungsnaht bewirkt, weil sich eine günstigere Luftströmung ergibt. Der daraus resultierende Unterdruck hebt das Packmittel zuverlässiger und schneller an, auch weil weniger Masse an Packmittel angehoben werden muss. Bevorzugt wird ein Abstand der beiden Niederhaltezonen gewählt, der im Bereich des 1,5 - 2,5-Fachen der Breite der Überlappungsnaht liegt.

Bevorzugt können jeweils zwischen den beiden Niederhaltezonen und dem Siegelstreifen rampenförmige Übergangsflächen als Bestandteil der Rinnenform der Kontaktseite ausgebildet sein, wobei die rampenförmige Übergangsfläche, an der sich beim Warmsiegeln die Oberseite des ersten Kantenbereichs des Packmittelzuschnitts anlegt, einen steileren Rampenwinkel aufweist als die andere rampenförmige Übergangsfläche. Der erste Kantenbereich liegt bei der Überlappungsnaht oben auf und steht somit direkt mit dem Siegelstreifen in Kontakt. Aufgrund der bevorzugt unmittelbar an den Siegelstreifen angrenzenden Schräge (rampenförmige Übergangsfläche) wird beim Weitertakten in einer Verpackungsmaschine das Packmittel vom Siegelstreifen abgelöst. Hierdurch können thermische Abdrücke, die beim Vorbeiführen des Produkts an dem heißen Siegelstreifen entstehen könnten, vermieden werden, weil eventuell vorhandene Rückstellkräfte in dem verwendeten Verpackungsmaterial von der entsprechend weniger heißen rampenförmigen Übergangsfläche abgefangen werden. Bevorzugt kann das Ablösen des Verpackungsmaterials von dem Siegelstreifen vor dem Weiterbewegen des Produkts und/oder der Siegelleiste mittels eines von den Saugöffnungen abgegebenen Druckluftstoßes unterstützt werden.

Bei einer weiteren Ausführungsform ist vorgesehen, dass sich die Saugöffnungen in die rampenförmigen Übergangsflächen, bevorzugt bis angrenzend an die Niederhaltezonen, hinein erstrecken. Hierdurch werden auch die an die Warmsiegelzone angrenzenden Bereiche des Packmittels definiert an die rampenförmigen Übergangsflächen herangesaugt. Hierdurch lässt sich eine straffere Packung im Zusammenspiel mit den nah beieinanderliegenden Niederhaltezonen erzielen, weil das Packmittel an der entsprechend zugeordneten Seite des Produkts bis auf den schmalen Abschnitt zwischen den Niederhaltezonen unmittelbar am Produkt gehalten werden kann.

Im Folgenden wird eine Ausführungsform der vorliegenden Erfindung anhand von Zeichnungen näher erläutert. Es zeigen:
- Figur 1: eine perspektivische Vorderansicht einer erfindungsgemäßen Saugsiegelvorrichtung mit Anschlüssen,
- Figur 2: eine Vorderansicht der Saugsiegelvorrichtung aus Figur 1 ohne Anschlüsse,
- Figur 3: eine vergrößerte perspektivische Seitenansicht eines Teils, insbesondere der Siegelleiste der Saugsiegelvorrichtung aus Figur 1,
- Figur 4: eine Draufsicht der beiden Siegelstreifenelemente der Siegelleiste mit Temperatursensor,
- Figur 5: eine vergrößerte Querschnittsdarstellung der Siegelleiste entlang der Linie V-V in Figur 2 geschnitten und mit verpacktem Produkt,
- Figur 6: eine vergrößerte Querschnittsdarstellung der Siegelleiste entlang der Linie VI-VI in Figur 2 geschnitten und mit verpacktem Produkt,

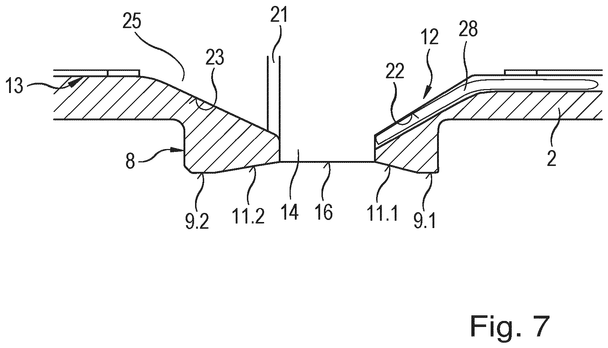

- Figur 7: eine vergrößerte Querschnittsdarstellung der Siegelleiste entlang der Linie VII-VII in Figur 2, aber ohne verpacktes Produkt, geschnitten.

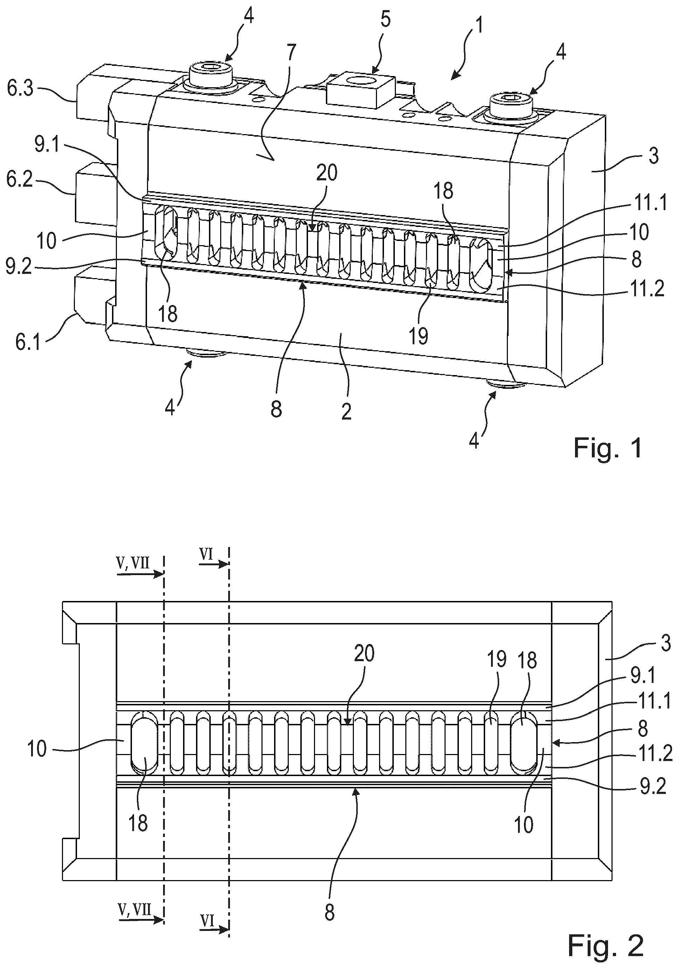

Die in den Figuren 1 und 2 dargestellte Saugsiegelvorrichtung 1 wird üblicherweise in einer nicht näher dargestellten Verpackungsmaschine in einer Vielzahl eingesetzt. Die Verpackungsmaschine enthält meist Rotationsköpfe, die mit entsprechenden Saugsiegelvorrichtungen 1 versehen sind oder mit den Saugsiegelvorrichtungen 1 in Wirkbeziehung stehen. Es werden zum Teil komplexe und sehr schnelle Bewegungsabläufe ausgeführt, um den Warmsiegelvorgang umzusetzen. Die hierzu erforderliche Kinematik erschließt sich in der Verpackungstechnik, sobald der Aufbau und die Ansteuerung der Saugsiegelvorrichtung 1 bekannt sind, zwangsläufig und muss daher hier nicht näher erläutert werden.

Die Saugsiegelvorrichtung 1 umfasst im Wesentlichen eine Siegelleistenplatte 2 und einen Plattenhalter 3. In Figur 1 ist zu sehen, wie die Siegelleistenplatte 2 mit dem Plattenhalter 3 mittels der Schrauben 4 verschraubt ist. Des Weiteren sind ein Anschluss 5 für eine Saugvorrichtung und Anschlüsse 6.1, 6.2 und 6.3 zum Verbinden mit entsprechenden Heizeinrichtungen dargestellt.

Die Siegelleistenplatte 2 weist an ihrer Vorderseite 7 eine vorstehende, in der Vorderansicht (Fig. 2) rechteckförmige Siegelleiste 8 auf. Anhand der Figur 3 ist zu erkennen, dass die Siegelleiste 8 an ihrer Vorderseite eine Rinnenform mit zwei im Abstand zu einander verlaufenden Niederhaltezonen 9.1 und 9.2, einer vertieft angeordneten Grundfläche 10 sowie zwei rampenförmigen Übergangsflächen 11.1 und 11.2 aufweist. Die Niederhaltezonen 9.1 und 9.2 sowie die Grundfläche 10 und die beiden rampenförmige Übergangsflächen 11.1 und 11.2 weisen in der Vorderansicht (Fig. 2) eine Rechteckform auf.

In der Kontaktseite der Siegelleiste 8 sind in gleichmäßigem Abstand zueinander längliche Saugöffnungen 18 und 19 angeordnet. Die Länge der Saugöffnungen 18 und 19 ist so bemessen, dass sie sich genau zwischen der Niederhaltezone 9.1 und der Niederhaltezone 9.2 erstrecken. Die Breite der zwei Saugöffnungen 18, die jeweils an den Enden der länglichen Saugleiste 8 angeordnet sind, ist doppelt so groß (bevorzugt mind. 1,2 mal so groß) wie die Breite der dazwischenliegenden Saugöffnungen 19. Die Saugöffnungen 18 und die Saugöffnungen 19 weisen einen gerade verlaufenden mittleren Bereich und zwei kreisförmig abgerundete Endbereiche auf. Die Saugöffnungen 18 und 19 erstrecken sich somit in die rampenförmigen Übergangsflächen 11.1 und 11.2 hinein und bis an die jeweiligen Niederhaltezonen 9.1 und 9.2 heran.

Zwischen der Siegelleistenplatte 2 und dem Plattenhalter 3 sind ein erstes und ein zweites Siegelleistenelement 12 und 13 eingebaut (teilweise in Figur 4 dargestellt), die mit jeweils zwei der entsprechend zugeordneten Anschlüsse 6.1, 6.2 und 6.3 für die Heizeinrichtungen verbunden sind. Die Siegelleistenelemente 12 und 13 bestehen aus Messing (d. h. einem Kupfer enthaltenden Metallwerkstoff) und sind daher gut wärmeleitfähig. Im Gegensatz hierzu besteht die Siegelleistenplatte 2 aus einem wärmebeständigen Kunststoff und dient somit der Wärmeabschirmung. Abschnitte der Siegelleistenelemente 12 und 13, nämlich die Stege 14 des ersten Siegelleistenelements 12 und die Stege 15 des zweiten Siegelleistenelements 13, stehen nach außen vor und bilden mit der Siegelleiste 8 eine Einheit. Die außenliegenden, rechteckförmigen Kontaktflächen 16 des ersten Siegelleistenelements 12 und die außenliegenden, rechteckförmigen Kontaktflächen 17 des zweiten Siegelleistenelements 13 befinden sich in der gleichen Ebene wie die Grundfläche 10. Im gezeigten Ausführungsbeispiel gibt es vier Kontaktflächen 16 und zehn Kontaktflächen 17. Die Kontaktflächen 16 und 17 sind jeweils durch eine schmale Saugöffnung 19 voneinander getrennt. Die Breite der Kontaktflächen 16 und 17 entspricht im Wesentlichen der Breite der schmalen Saugöffnungen 19. Eine jeweils an den Enden der Siegelleiste 8 liegende Kontaktfläche 16 ist von der Grundfläche 10 jeweils durch eine breite Saugöffnung 18 getrennt.

Aufgrund dieser Ausgestaltung weist die Siegelleiste 8 in ihrer Mitte einen von den Kontaktflächen 16 und 17 bereitgestellten Siegelstreifen 20 auf, der von dreizehn schmalen Saugöffnungen 19 unterbrochen ist. Der Siegelstreifen 20 ist der eigentliche Wärme einbringende Bestandteil der Siegelleiste 8. Der Siegelstreifen 20 ist gegenüber den Niederhaltezonen 9.1 und 9.2 an der Siegelleiste 8 vertieft angeordnet.

In Figur 4 sind die Hauptbestandteile der beiden Siegelleistenelemente 12 und 13 dargestellt. Die beiden Siegelleistenelemente 12 und 13 sehen in der Draufsicht in etwa wie zwei teilweise zahnlose Kämme aus, die sich aber gegenseitig ergänzen, d. h. die Siegelleistenelemente 12 und 13 sind komplementär ausgebildet, so dass ihre Stege 14 und 15 gemeinsam den Siegelstreifen 20 ausformen können. Das erste Siegelleistenelement 12 weist jeweils zwei vorstehende Stege 14 an seinen Endbereichen auf. Im Gegensatz hierzu weist das zweite Siegelleistenelement 13 in seinem mittleren Abschnitt zehn nebeneinander angeordnete, vorstehende Stege 15 auf. Die beiden Elemente 12 und 13 sind so angeordnet, dass zwischen ihnen ein isolierender Spalt 21 verbleibt, sodass sie nicht miteinander in Kontakt stehen und sich somit auch wärmetechnisch im Wesentlichen nicht gegenseitig beeinflussen. Die beiden Elemente 12 und 13 greifen aber so ineinander, dass insgesamt vierzehn Stege 14 und 15 im Abstand nebeneinander angeordnet sind.

Die schmalen Saugöffnungen 19 werden an ihrem Öffnungsrand von dem Zusammenspiel der Siegelleistenplatte 2 und zumindest einem der Siegelleistenelemente 12 und 13 gebildet. Der mittlere Abschnitt der schmalen Saugöffnungen 19 wird von den Stegen 14 oder 15 bestimmt und die jeweiligen Endabschnitte von der Siegelleistenplatte 2. Die jeweils äußerste schmale Saugöffnung 19 wird seitlich von den Stegen 14 des ersten Siegelleistenelements 12 begrenzt und die jeweils daneben liegende schmale Saugöffnung 19 wird sowohl von einem Steg 14 des ersten Siegelleistenelements 12 als auch von einem Steg 15 des zweiten Siegelleistenelements 13 seitlich begrenzt. Alle weiteren schmalen Saugöffnungen 19 werden ausschließlich von den Stegen 15 des zweiten Siegelleistenelements 13 seitlich begrenzt.

Die breiten Saugöffnungen 18 werden an ihrem Öffnungsrand von dem Zusammenspiel der Siegelleistenplatte 2 mit dem ersten Siegelleistenelement 12 gebildet. Der mittlere Abschnitt der breiten Saugöffnungen 18 wird auf der einen Seite von dem Steg 14 des ersten Siegelleistenelements 12 und auf der anderen Seite von dem Abschnitt des Siegelleistenplatte 2 begrenzt, der die Grundfläche 10 ausbildet.

Aus der Figur 1 und der Figur 3 ist zu erkennen, dass die Stege 14 und 15 der beiden Elemente 12 und 13 an ihrem oberen, die Kontaktflächen 16 und 17 bildenden Enden als Quader ausgebildet sind und dann mit Versatz sich schräg nach unten erweitern. Die entsprechend diese Schrägen bildenden Rampenflächen 22 und 23 gehen über das Ende der jeweiligen Saugöffnungen 18 und 19 hinaus. Die Stege 14 sind an einer gemeinsamen Stegleiste 24 und die Stege 15 an einer gemeinsamen Stegleiste 25 angeordnet. Die Rampenflächen 22 und 23 sind entsprechend bis auf diese Stegleisten 24 fortgesetzt. Die Siegelleistenplatte 2 weist auf ihrer Innenseite eine entsprechende Gegenkontur zur passgenauen Aufnahme dieser Bereiche der beiden Siegelleistenelemente 12 und 13 auf. Die Ausgestaltung ist derart, dass die Saugöffnungen 18 und 19 in Tiefenrichtung zum Inneren der Saugsiegelvorrichtung 1 hin immer mehr und schließlich vollständig von den beiden Siegelleistenelementen 12 und 13 umgeben sind. Das gilt für die innere Seite der breiten Saugöffnungen 18 ebenso, allerdings erstrecken sich die beiden innerhalb der Siegelleiste 8 angeordneten Abschnitte der Stegleisten 24 und 25 nur etwa bis zur Mitte der Breite der breiten Saugöffnungen 18, sodass an dieser Stelle jeweils ein Stufenabsatz 26 und 27 ausgeformt ist, dessen Gegenkontur wiederum von der Siegelleistenplatte 2 gebildet wird. Hierdurch kann eine passgenaue Anordnung der Stegleisten 24 und 25 in der Siegelleistenplatte 2 erfolgen.

Unterhalb der beiden Siegelleistenelemente 12 und 13 befindet sich ein mit dem Anschluss 5 in Verbindung stehender Saugkanal, in den sämtliche Saugöffnungen 18 und 19 münden. Aufgrund der einheitlichen Anlegung eines gemeinsamen Unterdrucks (Vakuum) entsteht durch die unterschiedliche Größe der Saugöffnung 18 und der Saugöffnung 19 eine stärkere Ansaugung an den beiden Endbereichen der Siegelleiste 8.

Jede der Saugöffnungen 18 und 19 weist ausgehend vom Öffnungsrand zunächst einen gleichbleibenden Querschnitt auf, der sich jedoch mit zunehmender Tiefe verkleinert. Diese trichterförmige Verjüngung wird ausschließlich durch die Konturierung der zugehörigen Abschnitte der beiden Siegelleistenelemente 12 und 13 bewirkt. Die Verjüngung ist derart, dass eine Verkleinerung der Länge der Saugöffnungen 18 und 19 um fast 20 % erfolgt.

Aus der Figur 4 ist zu entnehmen, dass an dem ersten Siegelleistenelement 12 ein Temperatursensor 28 und an dem zweiten Siegelleistenelement 13 ein Temperatursensor 29 vorgesehen ist. Der Temperatursensor 28 ist an der Rampenfläche 22 auf Höhe des ersten Stegs 14 auf der linken Seite des ersten Siegelleistenelements 12 angebracht. Der Temperatursensor 29 ist an der Rampenfläche 23 auf Höhe eines Stegs 15 etwa in der Mitte des zweiten Siegelleistenelements 13 angebracht. Die beiden Temperatursensoren 28 und 29 stehen mit einer nicht dargestellten Temperaturregeleinrichtung in Verbindung. Entsprechend kann die Temperatur des ersten Siegelleistenelements 12 und die Temperatur des zweiten Siegelleistenelements 13 relativ nahe an der jeweiligen Kontaktfläche 16 bzw. 17 bestimmt und mittels einer entsprechend in den Regelkreis eingebundenen Heizeinrichtung geregelt werden. Bei den Kontaktflächen 16 des ersten Siegelleistenelements 12 ist in aller Regel eine höhere Temperatur gewünscht als an den Kontaktfläche 17 des zweiten Siegelleistenelements 13.

Aus den Figuren 1 bis 3 ist sehr gut zu erkennen, dass die rampenförmige Übergangsfläche 11.1 schmaler ist als die rampenförmige Übergangsfläche 11.2. Hierdurch werden auch der Siegelstreifen 20 und die Grundfläche 10 außermittig, d. h. versetzt zur Längsachse A der Siegelleiste 8, angeordnet. In der Verpackungsmaschine ist die breitere rampenförmige Übergangsfläche 11.2 vorlaufend und die schmalere rampenförmige Übergangsfläche 11.1 dementsprechend nachlaufend.

Ergänzend sei darauf hingewiesen, dass die Länge und Breite der Siegelleiste 8 sowie die Anzahl der Saugöffnungen 18, 19 in Abhängigkeit von dem verwendeten Verpackungsmaterial und der Produktform variieren können. Auch die Verteilung der Stege 14 und 15 sowie die der Saugöffnungen 18 und 19 kann auf unterschiedliche Weise und an die entsprechenden Gegebenheiten angepasst werden. Die Verwendung von mehr als zwei Siegelleistenelementen, die unterschiedlich temperiert werden können, ist möglich. Der Siegelstreifen kann auch andere Formen als eine Rechteckform annehmen.

Die Saugansteuerung über den Anschluss 5 kann zum Beispiel über ein Rotationsventil erfolgen, sodass sich Unterdruck- (Vakuum) und ggf. Druckbeaufschlagung sehr schnell abwechseln können oder ab- und angeschaltet werden können.

In der vorliegenden Ausführungsform stellen die Kontaktflächen 16 eine erste Zone zum Einbringen von Wärmeenergie in den zu versiegelnden Abschnitt und die Kontaktflächen 17 eine zweite Zone zum Einbringen von Wärmeenergie in den zu versiegelnden Abschnitt dar. Die beiden Zonen können aufgrund der Ausgestaltung unterschiedlich temperiert werden, sodass in den jeweiligen Zonen eine unterschiedliche Wärmeenergiezufuhr pro mm² stattfindet. Unterstützt wird diese unterschiedliche Wärmeenergiezufuhr pro mm² auch von der unterschiedlich starken Ansaugung mittels der unterschiedlich breiten Saugöffnungen 18, 19.

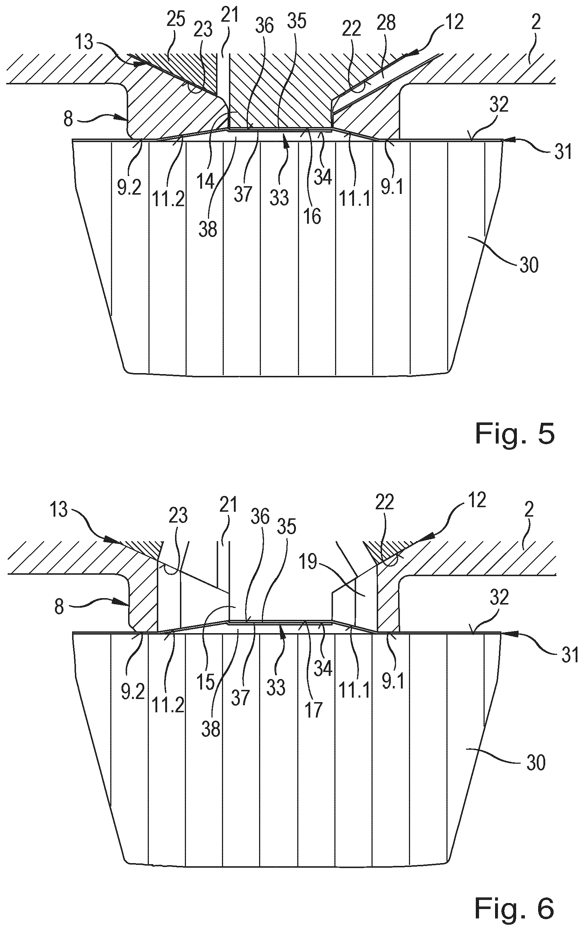

Im Folgenden wird die Wirkungs- und Funktionsweise der oben beschriebenen Saugsiegelvorrichtung 1 unter Zuhilfenahme der Figuren 5 und 6 näher erläutert.

Beispielhaft handelt sich bei dem zu verpackenden Produkt 30 um einen länglichen Schokoladenriegel. In vorhergehenden Schritten wird in der Verpackungsmaschine ein Packmittelzuschnitt 31 dem Produkt 30 zugeführt und das Produkt 30 damit verpackt, wobei zumindest abschließend eine Überlappungsnaht 33 erzeugt wird. Im vorliegenden Fall soll beispielhaft eine Brieffaltung zur Anwendung kommen, bei der vor dem Erzeugen der Überlappungsnaht 33 die Falteinschläge an den Stirnseiten des Produkts 30 geformt werden. Die Überlappungsnaht 33 erstreckt sich dann nicht über die gesamte Länge des Produkts, sondern beginnt und endet im Abstand zu den Stirnseiten des Produkts 30. Darüber hinaus liegt die Überlappungsnaht 33 zumindest in den stirnseitennahen Bereichen auf weiteren Lagen des Packmittelzuschnitts 31 auf.

Die Brieffaltung soll nur beispielhaft verstanden sein; hier können auch andere Faltarten zur Anwendung kommen, bei denen eine Überlappungsnaht erzeugt wird.

Zur Erzeugung der Überlappungsnaht 33wird eine Innenseite 34 eines ersten Kantenbereichs 35 des Packmittelzuschnitts 31 auf eine Außenseite 36 eines zweiten Kantenbereichs 35 des Packmittelzuschnitts 31 gefaltet. Abschließend muss diese Überlappungsnaht 33 warmversiegelt werden, um den Verpackungsvorgang abzuschließen. Hierzu handelt es sich bei dem Packmittelzuschnitt 31 um ein warmversiegelungsfähiges Material, z. B. ein geeignetes Kunststoffmaterial.

Das so vorverpackte Produkt 30 wird dann in der Verpackungsmaschine der Saugsiegelvorrichtung 1 zugeführt. Es besteht aber auch die Möglichkeit, dass sich hierzu sowohl das Produkt 30 als auch die Saugsiegelvorrichtung 1 bewegen. Das Heranführen der Siegelleiste 8 an das Produkt erfolgt von rechts (siehe Figur 5), sodass die Überlappungsnaht 33 glattgestrichen werden kann. Anschließend werden die Niederhaltezonen 9.1 und 9.2 abgesetzt und halten den Packmittelzuschnitt 31 an der Unterseite 32 des Produkts 30 fest. Es kommt dann zu einem Zeitabschnitt, in dem die Siegelleiste 8 relativ zum Produkt 30 im Wesentlichen stillsteht. Ein gemeinsamer Weitertransport von Produkt 30 und Saugsiegelvorrichtung 1 in dieser Phase ist aber möglich. Üblicherweise verlaufen die Längsachse A der Siegelleiste 8 und die Längsachse der Überlappungsnaht parallel zueinander. Es besteht aber auch die Möglichkeit, dass diese deckungsgleich sind. Zu diesem Zeitpunkt wird der Unterdruck in der Saugsiegelvorrichtung 1 aktiviert und die Saugöffnungen 18 und 19 ziehen die Bestandteile des Packmittelzuschnitts 31, die sich zwischen den beiden Niederhaltezonen 9.1 und 9.2 befinden, an. Die Größe des Abhebevorgangs wird von dem vertikalen Abstand zwischen den Niederhaltezonen 9.1, 9.2 und den Kontaktflächen 16 und 17 bestimmt. Zwischen der Überlappungsnaht 33 und der Unterseite 32 des Produkts 30 bildet sich dann ein wärmeisolierender Hohlraum 38 aus.

Gleichzeitig legen sich Bestandteile des Packmittelzuschnitts 31 außerhalb der Überlappungsnaht 33 an die rampenförmigen Übergangsflächen 11.1 und 11.2 an. Aufgrund dieser sauberen Anlage an der Kontaktseite der Siegelleiste 8 sind präzise, reproduzierbare Zeiten für diesen Ansaugvorgang erzielbar, was für die Taktung in der Verpackungsmaschine von großem Vorteil ist.

Sobald sich die Außenseite des ersten Kantenbereichs 35 an dem Siegelstreifen 20 anlegt, erfolgt ein Wärmeenergieeintrag mittels der entsprechenden Kontaktflächen 16 und 17. Für die gewählte Verpackungsform ist es wünschenswert, wenn, über die Länge der Überlappungsnaht 33 gesehen, ein bestimmtes einzubringendes Wärmeenergieprofil vorliegt. Im vorliegenden Fall handelt es sich um ein vergleichsweise einfaches Wärmeenergieprofil, bei dem an den beiden Endbereichen der Überlappungsnaht 33 eine höhere Wärmeenergiezufuhr pro mm² erfolgen soll als an dem dazwischenliegenden Abschnitt. Damit dies bei den geringen Taktzeiten ermöglicht wird, werden im vorliegenden Fall zwei sich unterstützende Maßnahmen eingesetzt. Zum einen erfolgt an den Endbereichen der Überlappungsnaht 33 eine verstärkte Ansaugung mittels der breiteren Saugöffnungen 18. Hierdurch legt sich die Außenseite des ersten Kantenbereichs 35 fester an die Kontaktflächen 16 in der Nähe der breiten Saugöffnungen 18 an. Die Wärmeübertragung von dem entsprechenden Steg 14 in den entsprechend zugeordneten Bereich des Packmittelzuschnitts 31 wird hierdurch verbessert. Zum anderen wird das erste Siegelleistenelement 12 mit einer höheren Temperatur versehen als das zweite Siegelleistenelement 13. Entsprechend weisen die Stege 14 mit ihren Kontaktflächen 16 eine höhere Temperatur auf als die Stege 15 mit ihren Kontaktflächen 17. An den Endbereichen der Überlappungsnaht 33 sind nämlich auch mehr als zwei Lagen des Packmittelzuschnitts 31 miteinander zu verbinden, weshalb ein erhöhter Wärmeeintrag in diesem Bereich von großem Nutzen ist. Im vorliegenden Fall liegt die Wärmeenergiezufuhr pro mm² im Bereich der Kontaktflächen 16 mindestens 1,5 mal höher als an den Kontaktflächen 17.

Sobald ein ausreichender Wärmeeintrag über den gesamten zu versiegelnden Abschnitt der Überlappungsnaht 33 stattgefunden hat, wird der Unterdruck abgeschaltet und ein Druckimpuls erzeugt, der mittels der Saugöffnungen 18, 19 abgegeben wird. Gleichzeitig bewegen sich die Saugsiegelvorrichtung 1 und das Produkt 30 wieder relativ zueinander. Dabei bewegt sich das Produkt 30 relativ zur Siegelleiste 8 nach rechts (Figur 5). Die rampenförmige Übergangsfläche 11.1 sorgt dann als eine Art Niederhalter dafür, dass Rückstellkräfte, die im Packmittelzuschnitt 31 nach dem Ablösen durch den Druckimpuls im Bereich der Überlappungsnaht 33 wirken können, nicht mehr zu einem Anhaften an dem Siegelstreifen 20 führen. Damit können thermische Abdrücke auf der Außenseite des Packmittelzuschnitts 31 vermieden werden. Im ungünstigen, eigentlich nicht gewünschten Fall sorgt die rampenförmige Übergangsfläche 11.1 für ein gleichmäßiges Ablösen des Packmittelzuschnitts 31 von dem Siegelstreifen 20.

Aufgrund der Ausgestaltung der Kontaktseite der Siegelleiste 8 ergibt sich ein schnelleres, effektiveres Ansaugen des ersten und zweiten Kantenbereichs 35 und 37, da nur eine geringe Masse an Packmittel angehoben werden muss. Es entsteht hierdurch auch eine straffere Verpackung als bei nicht niedergehaltenen Kantenbereichen oder bei Niederhalten mit größerem Abstand. Im vorliegenden Fall entspricht der Abstand zwischen den beiden Niederhaltezonen 9.1, 9.2 in etwa der doppelten Breite der Überlappungsnaht 33 (bevorzugt wird ein Abstand im Bereich des 1,5-2,5-Fachen der Breite der Überlappungsnaht 33). Aufgrund der Rinnenform, die die Siegelleiste 8 an ihrer Kontaktseite aufweist, wird ein fast vollständig abgeschlossener Bereich gebildet, der nur an den Stirnenden offen ist (nach Art einer Saugglocke). Dadurch wird die Ansaugwirkung konzentriert und das Ansaugen erfolgt schneller und reproduzierbarer. Damit ergeben sich definierte Kontaktzeiten zum heißen Siegelstreifen 20. Dies ist von großem Vorteil für den taktweise konstanten Energieeintrag an den entsprechenden Zonen.

### Bezugszeichenliste

- 1: Saugsiegelvorrichtung
- 2: Siegelleistenplatte
- 3: Plattenhalter
- 4: Schraube
- 5: Anschluss für Saugvorrichtung
- 6.1: erster Anschluss für Heizeinrichtung
- 6.2: zweite Anschluss für Heizeinrichtung
- 6.3: dritter Anschluss für Heizeinrichtung
- 7: Vorderseite
- 8: Siegelleiste
- 9.1: erste Niederhaltezone
- 9.2: zweite Niederhaltezone
- 10: Grundfläche
- 11.1: erste rampenförmige Übergangsfläche
- 11.2: zweite rampenförmige Übergangsfläche
- 12: erstes Siegelleistenelement
- 13: zweites Siegelleistenelement
- 14: Steg des ersten Siegelleistenelements
- 15: Steg des zweiten Siegelleistenelements
- 16: Kontaktfläche des Stegs 14
- 17: Kontaktfläche des Stegs 15
- 18: Saugöffnung breit
- 19: Saugöffnung schmal
- 20: Siegelstreifen
- 21: Spalt
- 22: erste Rampenfläche
- 23: zweite Rampenfläche
- 24: erste Stegleiste
- 25: zweite Stegleiste
- 26: erster Stufenabsatz
- 27: zweiter Stufenabsatz
- 28: erster Temperatursensor
- 29: zweiter Temperatursensor
- 30: Produkt
- 31: Packm ittelzuschnitt
- 32: Unterseite
- 33: Überlappungsnaht
- 34: Innenseite
- 35: erster Kantenbereich
- 36: Außenseite
- 37: zweiter Kantenbereich
- 38: Hohlraum
- A: Längsachse Siegelleiste 8

## Patentansprüche

1. Verfahren zum Saugsiegeln einer Überlappungsnaht (33) beim Verpacken von empfindlichen, insbesondere wärmeempfindlichen Produkten (30), mit folgenden Schritten:
Umhüllen des Produkts (30) mit einem versiegelungsfähigen Packmittelzuschnitt (31), wobei eine Überlappungsnaht (33) erzeugt wird, indem eine Innenseite (34) eines ersten Kantenbereichs (35) auf eine Außenseite (36) eines zweiten Kantenbereichs (37) des Packmittelzuschnitts (31) gefaltet wird,
Fixieren der Überlappungsnaht (33) mittels einer Saugsiegelvorrichtung (1), indem ein Bereich oder mehrere Bereiche der Überlappungsnaht (33) an eine Kontaktseite der Saugsiegelvorrichtung (1) angesaugt wird bzw. werden, sodass der erste und der zweite Kantenbereich (35, 37) des Packmittelzuschnitts (31) im Bereich der Überlappungsnaht (33) vom Produkt (30) abgehoben werden, wobei zumindest im abgehobenen Zustand der Kantenbereiche (35, 37) ein Wärmeenergieeintrag mittels der Saugsiegelvorrichtung (1) derart erfolgt, dass entlang der Längsachse der Überlappungsnaht (33) ein Wärmeenergieprofil vorliegt, **dadurch gekennzeichnet, dass** entlang der Längsachse der Überlappungsnaht (33) in Bezug auf zumindest einen Bereich der Überlappungsnaht (33) mindestens ein Siegelparameter anders eingestellt ist als in Bezug auf mindestens einen anderen Bereich der Überlappungsnaht (33), wobei der mindestens eine Siegelparameter aus folgender Gruppe umfassend (a) bis (d) ausgewählt ist: (a) die Kontaktzeit des Packmittelzuschnitts mit dem jeweils zugeordneten wärmeeinbringenden Bereich der Saugsiegelvorrichtung (1), (b) die Wärmeenergiezufuhr pro mm², (c) der Ansaugdruck und (d) die Siegelfähigkeit des Packmittelzuschnitts (31).

2. Verfahren nach Anspruch 1,
**dadurch gekennzeichnet, dass** als anders eingestellter Siegelparameter zumindest die Wärmeenergiezufuhr pro mm² verwendet wird und das Wärmeenergieprofil beim Fixierschritt derart ausgebildet ist, dass in einem Bereich der höchsten Wärmeenergiezufuhr pro mm² eine 1,01 bis 1,3 mal, bevorzugt eine 1,05 bis 1,15 mal, höhere Wärmeenergiezufuhr pro mm² als in einem Bereich mit der geringsten Wärmeenergiezufuhr pro mm² vorliegt.

3. Verfahren nach Anspruch 1 oder 2,
**dadurch gekennzeichnet, dass** an den Endbereichen des zu versiegelnden Abschnitts der Überlappungsnaht (33) eine höhere Wärmeenergiezufuhr pro mm² als an mindestens einem dazwischenliegenden Bereich des zu versiegelnden Abschnitts der Überlappungsnaht 33) erfolgt.

4. Verfahren nach einem der Ansprüche 1-3,
**dadurch gekennzeichnet, dass** als anders eingestellter Siegelparameter zumindest der Ansaugdruck verwendet wird und in zumindest einem Bereich des zu versiegelnden Abschnitts der Überlappungsnaht (33) mittels einer a bis b mal, bevorzugt c bis d mal stärkeren Ansaugung in diesem Bereich oder in der Nähe dieses Bereichs, bevorzugt angrenzend an diesen Bereich, bewirkt wird.

5. Verfahren nach einem der Ansprüche 1-3,
**dadurch gekennzeichnet, dass** die höhere Wärmeenergiezufuhr pro mm² in zumindest einem Bereich des zu versiegelnden Abschnitts der Überlappungsnaht (33) mittels einer höheren Siegeltemperatur im zugeordneten Bereich der Saugsiegelvorrichtung (1) bewirkt wird.

6. Saugsiegelvorrichtung (1) zum Warmsiegeln einer Überlappungsnaht (33) mit einer Längsachse beim Verpacken von empfindlichen, insbesondere wärmeempfindlichen Produkten (30), mit einer Siegelleiste (8), die eine Kontaktseite aufweist und an der Kontaktseite mit mehreren Saugöffnungen (18, 19) versehen ist,
**dadurch gekennzeichnet, dass** der die Wärmeenergie für das Warmsiegeln einbringende Bereich bzw. die die Wärmeenergie für das Warmsiegeln einbringenden Bereiche der Kontaktseite der Siegelleiste (8) in Richtung der Längsachse der zu versiegelnden Überlappungsnaht (33) in mindestens zwei Zonen unterteilt ist bzw. sind, die so ausgestaltet sind, dass in diesen jeweils mindestens ein Siegelparameter anders eingestellt ist, wobei der mindestens eine Siegelparameter aus folgender Gruppe umfassend (a) bis (c) ausgewählt ist: (a) die Kontaktzeit des Packmittelzuschnitts mit dem jeweils zugeordneten wärmeeinbringenden Bereich der Saugsiegelvorrichtung (1), (b) die Wärmeenergiezufuhr pro mm², und (c) der Ansaugdruck.

7. Vorrichtung (1) nach Anspruch 6,
**dadurch gekennzeichnet, dass** die Siegelleiste (8) derart ausgebildet ist, dass jeweils an den Enden des zu versiegelnden Abschnitts der Überlappungsnaht (33) eine Zone mit einer höheren Wärmeenergiezufuhr pro mm² als in einem dazwischenliegenden Bereich vorhanden ist.

8. Vorrichtung (1) nach Anspruch 6 oder 7,
**dadurch gekennzeichnet, dass** die Kontaktfläche der Siegelleiste (8) jeweils an den Enden des Warmsiegelbereichs mit mindestens einer größeren Saugöffnung (18) als im mittleren Abschnitt des Warmsiegelbereichs versehen ist, um einen größeren Ansaugdruck zu erzeugen.

9. Vorrichtung (1) nach einem der Ansprüche 6-8,
**dadurch gekennzeichnet, dass** die Saugöffnungen (18, 19) beim Warmsiegeln in Längsrichtung der Überlappungsnaht (33) nebeneinander angeordnet sind, die Kontaktseite einen längs der Überlappungsnaht (33) anzuordnenden von den Saugöffnungen (19) jeweils unterbrochenen Siegelstreifen (20) mit höherer Wärmeleitfähigkeit und/oder höherer einbringbarer Wärmekapazität als der Rest der Kontaktseite aufweist und die mindestens zwei Zonen mit unterschiedlicher Wärmeenergiezufuhr pro mm² von dem Siegelstreifen (20) bereitgestellt sind.

10. Vorrichtung (1) nach Anspruch 9,
**dadurch gekennzeichnet, dass** der Siegelstreifen (20) an der Kontaktseite von mindestens zwei separaten temperaturgesteuerten oder -geregelten Siegelstreifenelementen (12, 13) geformt ist.

11. Vorrichtung (1) nach Anspruch 10,
**dadurch gekennzeichnet, dass** jedes der mindestens zwei Siegelstreifenelemente (12, 13) mit einer eigenen ansteuerbaren oder geregelten Heizeinrichtung wirkverbunden ist.

12. Vorrichtung (1) nach Anspruch 10 oder 11,
**dadurch gekennzeichnet, dass** mindestens ein, bevorzugt jedes temperaturgesteuertes oder -geregeltes Siegelstreifenelement (12, 13) mit einem eigenen Temperatursensor (28, 29) versehen ist.

13. Vorrichtung (1) nach einem der Ansprüche 6-12,
**dadurch gekennzeichnet, dass** die Kontaktseite der Siegelleiste (8) eine beim Warmsiegeln entlang der Überlappungsnaht (33) verlaufende Rinnenform mit zwei im Abstand zueinander verlaufenden Niederhaltezonen (9.1, 9.2) und dem dazwischen und zu den Niederhaltezonen (9.1, 9.2) vertieft angeordneten Siegelstreifen (20) aufweist.

14. Vorrichtung (1) nach Anspruch 13,
**dadurch gekennzeichnet, dass** jeweils zwischen den beiden Niederhaltezonen (9.1, 9.2) und dem Siegelstreifen (20) rampenförmige Übergangsflächen (11.1, 11.2) als Bestandteil der Rinnenform ausgebildet sind, wobei die rampenförmige Übergangsfläche (11.1), an der sich beim Warmsiegeln die Oberseite des ersten Kantenbereichs (35) des Packmittelzuschnitts (31) anlegt, einen steileren Rampenwinkel aufweist als die andere rampenförmige Übergangsfläche (11.2).

15. Vorrichtung (1) nach Anspruch14,
**dadurch gekennzeichnet, dass** sich die Saugöffnungen (18, 19) in die rampenförmigen Übergangsflächen (11.1, 11.2), bevorzugt bis angrenzend an die Niederhaltezonen (9.1, 9.2), hinein erstrecken.

## Claims

1. A method for suction-sealing an overlap seam (33) when packaging delicate, in particular heat-sensitive products (30), comprising the following steps:
enveloping the product (30) with a sealable packaging blank (31), wherein an overlap seam (33) is formed by folding an inner side (34) of a first edge region (35) onto an outer side (36) of a second edge region (37) of the packaging blank (31),
fixing the overlap seam (33) using a suction sealing device (1) by drawing one or more areas of the overlap seam (33) against a contact surface of the suction sealing device (1), so that the first and second edge regions (35, 37) of the packaging blank (31) in the region of the overlap seam (33) are lifted away from the product (30), wherein, at least while the edge regions (35, 37) are lifted, thermal energy is applied by means of the suction sealing device (1) in such a way that a heat energy profile exists along the longitudinal axis of the overlap seam (33),
**characterized in that** along the longitudinal axis of the overlap seam (33), with respect to at least one region of the overlap seam (33), at least one sealing parameter is set differently than with respect to at least one other region of the overlap seam (33), wherein the at least one sealing parameter is selected from the following group comprising (a) through (d): (a) the contact time between the packaging blank and the respective heat-introducing area of the suction sealing device (1), (b) the heat energy supply per mm², (c) the suction pressure, and (d) the sealing capability of the packaging blank (31).

2. The method according to claim 1,
**characterized in that** at least the heat energy supply per mm² is used as a differently set sealing parameter, and the heat energy profile during the fixing step is configured such that, in a region of the highest heat energy supply per mm², the higher heat energy supply per mm² than in a region with the lowest heat energy supply per mm².

3. The method according to claim 1 or 2,
**characterized in that** a higher heat energy supply per mm2 is applied at the end regions of the section of the overlap seam (33) to be sealed than at at least one intermediate region of the section of the overlap seam (33) to be sealed.

4. The method according to any one of claims 1-3,
**characterized in that** at least the suction pressure is used as the differently adjusted sealing parameter, and in at least one region of the section of the overlap seam (33) to be sealed, this is achieved by means of suction that is a to b times, preferably c to d times, stronger in this region or in the vicinity of this region, preferably adjacent to this region.

5. The method according to any one of claims 1-3,
**characterized in that** the higher heat energy supply per mm2 is achieved in at least one region of the section of the overlap seam (33) to be sealed by means of a higher sealing temperature in the corresponding region of the suction sealing device (1).

6. A suction sealing device (1) for heat-sealing an overlap seam (33) having a longitudinal axis when packaging sensitive, in particular heat-sensitive, products (30), comprising a sealing bar (8) that has a contact side and is provided with a plurality of suction openings (18, 19) on the contact side,
**characterized in that** the region or regions of the contact side of the sealing bar that supply the thermal energy for heat sealing (8) is or are divided, in the direction of the longitudinal axis of the overlap seam (33) to be sealed, into at least two zones, which are configured such that at least one sealing parameter is set differently in each of these zones, wherein the at least one sealing parameter is selected from the following group comprising (a) through (c): (a) the contact time between the packaging blank and the respective associated heat-introducing area of the suction sealing device (1), (b) the heat energy supply per mm2, and (c) the suction pressure.

7. The apparatus (1) according to claim 6,
**characterized in that** the sealing bar (8) is designed such that, at each end of the section of the overlap seam (33) to be sealed, there is a zone with a higher heat energy supply per mm2 than in an intervening region.

8. The apparatus (1) according to claim 6 or 7,
**characterized in that** the contact surface of the sealing bar (8) is provided, at each end of the heat-sealing area, with at least one suction opening (18) that is larger than those in the central section of the heat-sealing area, in order to generate a higher suction pressure.

9. A device (1) according to any one of claims 6-8,
**characterized in that,** during heat sealing, the suction openings (18, 19) are arranged side by side in the longitudinal direction of the overlap seam (33), the contact side has a sealing strip (20) with higher thermal conductivity and/or higher heat capacity than the rest of the contact side, which sealing strip (20) is to be arranged along the overlap seam (33) and is interrupted in each case by the suction openings (19), and the at least two zones with different heat energy supplies per mm² are provided by the sealing strip (20).

10. The device (1) according to claim 9,
**characterized in that** the sealing strip (20) on the contact side is formed from at least two separate temperature-controlled or temperature-regulated sealing strip elements (12, 13).

11. The device (1) according to claim 10,
**characterized in that** each of the at least two sealing strip elements (12, 13) is operatively connected to its own controllable or regulated heating device.

12. The apparatus (1) according to claim 10 or 11,
**characterized in that** at least one, preferably each, temperature-controlled or temperature-regulated sealing strip element (12, 13) is provided with its own temperature sensor (28, 29).

13. The apparatus (1) according to any one of claims 6-12,
**characterized in that** the contact side of the sealing bar (8) has a channel shape that extends along the overlap seam (33) during heat sealing, with two hold-down zones (9.1, 9.2) spaced apart from one another and a sealing strip (20) arranged in a recessed position between them and below the holding-down zones (9.1, 9.2).

14. The apparatus (1) according to claim 13,
**characterized in that** ramp-shaped transition surfaces (11.1, 11.2) are formed as part of the channel shape, wherein the ramp-shaped transition surface (11.1), against which the upper side of the first edge region (35) of the packaging blank (31) rests during heat sealing, has a steeper ramp angle than the other ramp transition surface (11.2).

15. The apparatus (1) according to claim 14,
**characterized in that** the suction openings (18, 19) extend into the ramp-shaped transition surfaces (11.1, 11.2), preferably up to and adjacent to the holding-down zones (9.1, 9.2).

## Revendications

1. Procédé de scellage par aspiration d'un joint à chevauchement (33) lors du conditionnement de produits (30) fragiles, notamment thermosensibles, comprenant les étapes suivantes :
envelopper le produit (30) d'une découpe d'emballage (31) apte au scellage, ce qui permet de former un joint à chevauchement (33) en repliant une face intérieure (34) d'une première zone de bord (35) sur une face extérieure (36) d'une deuxième zone de bord (37) de la découpe d'emballage (31),
fixer le joint à chevauchement (33) à l'aide d'un dispositif de scellage par aspiration (1), en aspirant une ou plusieurs zones du joint à chevauchement (33) contre une surface de contact du dispositif de scellage par aspiration (1), de sorte que les première et deuxième zones de bord (35, 37) de la découpe d'emballage (31) soient soulevées du produit (30) au niveau du joint à chevauchement (33), dans lequel, un apport d'énergie thermique est effectué, au moins lorsque les zones de bord (35, 37), un apport d'énergie thermique est effectué au moyen du dispositif de scellage par aspiration (1) de telle sorte qu'il existe un profil d'énergie thermique le long de l'axe longitudinal du joint à chevauchement (33), **caractérisé en ce que,** le long de l'axe longitudinal du joint à chevauchement (33), au moins un paramètre de scellage est réglé différemment pour au moins une zone du joint à chevauchement (33) par rapport à au moins une autre zone du joint à chevauchement (33), dans lequel ce paramètre de scellage est choisi parmi le groupe comprenant les éléments (a) à (d) suivants : (a) le temps de contact de la découpe d'emballage avec la zone d'apport de chaleur respectivement associée du dispositif de scellage par aspiration (1), (b) l'apport d'énergie thermique par mm², (c) la pression d'aspiration et (d) la capacité de scellage de la découpe d'emballage (31).

2. Procédé selon la revendication 1,
**caractérisé en ce que** l'apport d'énergie thermique par mm² est utilisé comme paramètre de scellage réglé différemment et **en ce que** le profil d'énergie thermique lors de l'étape de fixation est configuré de telle sorte que, dans une zone présentant l'apport d'énergie thermique par mm² le plus élevé, l'apport d'énergie thermique par mm² soit de 1,01 à 1,3 fois, de préférence de 1,05 à 1,15 fois, plus élevée que dans une zone présentant l'apport d'énergie thermique par mm² le plus faible.

3. Procédé selon la revendication 1 ou 2,
**caractérisé en ce qu'**un apport d'énergie thermique par mm² plus élevé est appliqué au niveau des zones d'extrémité de la partie à sceller du joint à chevauchement (33) qu'au niveau d'au moins une zone intermédiaire de la partie à sceller du joint à chevauchement (33).

4. Procédé selon l'une des revendications 1 à 3,
**caractérisé en ce qu'**au moins la pression d'aspiration est utilisée comme paramètre de scellage réglé différemment et **en ce que**, dans au moins une zone de la partie à sceller du joint à chevauchement (33), une aspiration de a à b fois, de préférence c à d fois plus forte, dans cette zone ou à proximité de celle-ci, de préférence adjacente à cette zone.

5. Procédé selon l'une des revendications 1 à 3,
**caractérisé en ce que** l'apport d'énergie thermique plus élevé par mm² dans au moins une zone de la partie à sceller du joint à chevauchement (33) est obtenu au moyen d'une température de scellage plus élevée dans la zone correspondante du dispositif de scellage par aspiration (1).

6. Dispositif de scellage par aspiration (1) destiné au scellage à chaud d'un joint à chevauchement (33) présentant un axe longitudinal lors du conditionnement de produits (30) sensibles, en particulier thermosensibles, comportant une barre de scellage (8) qui présente une surface de contact et qui est pourvue, sur ladite surface de contact, de plusieurs ouvertures d'aspiration (18, 19),
**caractérisé en ce que** la zone apportant l'énergie thermique pour le thermoscellage, ou les zones de la surface de contact de la barre de scellage (8) qui fournissent l'énergie thermique pour le thermoscellage sont subdivisées en au moins deux zones dans la direction de l'axe longitudinal du joint à chevauchement (33) à sceller, ou sont subdivisées, qui sont conçues de telle sorte que, dans chacune d'elles, au moins un paramètre de scellage soit réglé différemment, dans lequel l'au moins un paramètre de scellage est choisi parmi le groupe suivant comprenant (a) à (c) : (a) le temps de contact entre la découpe d'emballage et la zone d'apport de chaleur respectivement associée du dispositif de scellage par aspiration (1), (b) l'apport d'énergie thermique par mm², et (c) la pression d'aspiration.

7. Dispositif (1) selon la revendication 6,
**caractérisé en ce que** la barre de scellage (8) est conçue de telle sorte qu'aux extrémités de la partie à sceller du joint à chevauchement (33) se trouve une zone présentant un apport d'énergie thermique par mm² supérieur à celui d'une zone intermédiaire.

8. Dispositif (1) selon la revendication 6 ou 7,
**caractérisé en ce que** la surface de contact de la barre de scellage (8) est pourvue, à chacune des extrémités de la zone de thermoscellage, d'au moins une ouverture d'aspiration (18) plus grande que dans la partie centrale de la zone de thermoscellage, pour générer une pression d'aspiration plus élevée.

9. Dispositif (1) selon l'une des revendications 6 à 8,
**caractérisé en ce que** les ouvertures d'aspiration (18, 19) sont disposées les unes à côté des autres dans le sens longitudinal du joint à chevauchement (33) lors du thermoscellage, la face de contact comportant une bande de scellage (20) à disposer le long du joint à chevauchement (33), cette bande étant interrompue à chaque fois par les ouvertures d'aspiration (19) (20) à plus grande conductivité thermique et/ou à plus grande capacité thermique pouvant être apportée que le reste de la face de contact, et que la bande de scellage (20) fournit au moins deux zones présentant un apport d'énergie thermique différent par mm².

10. Dispositif (1) selon la revendication 9,
**caractérisé en ce que** la bande de scellage (20) est formée, sur la surface de contact, d'au moins deux éléments de bande de scellage (12, 13) distincts, à température contrôlée ou régulée.

11. Dispositif (1) selon la revendication 10,
**caractérisé en ce que** chacun des au moins deux éléments de bande de scellage (12, 13) est relié de manière fonctionnelle à son propre dispositif de chauffage commandable ou régulé.

12. Dispositif (1) selon la revendication 10 ou 11,
**caractérisé en ce qu'**au moins un, de préférence chaque élément de bande de scellage (12, 13) à température contrôlée ou régulée est muni de son propre capteur de température (28, 29).

13. Dispositif (1) selon l'une des revendications 6 à 12,
**caractérisé en ce que** la face de contact de la barre de scellage (8) présente une forme en rainure s'étendant le long du joint à chevauchement (33) lors du scellage à chaud, avec deux zones de maintien (9.1, 9.2) et d'une bande de scellage (20) disposée en creux entre celles-ci et en retrait par rapport aux zones de maintien (9.1, 9.2).

14. Dispositif (1) selon la revendication 13,
**caractérisé en ce que,** entre chacune des deux zones de maintien (9.1, 9.2) et la bande de scellage (20) sont formées des surfaces de transition en forme de rampe (11.1, 11.2) faisant partie intégrante de la forme en gouttière, la surface de transition en forme de rampe (11.1), contre laquelle, lors du thermoscellage, la face supérieure de la première zone de bord (35) de la découpe d'emballage (31) vient s'appuyer, présente un angle de rampe plus raide que l'autre surface de transition en forme de rampe (11.2).

15. Dispositif (1) selon la revendication 14,
**caractérisé en ce que** les ouvertures d'aspiration (18, 19) s'étendent dans les surfaces de transition en forme de rampe (11.1, 11.2), de préférence jusqu'à la limite des zones de maintien (9.1, 9.2).
